# EUROPEAN PATENT APPLICATION

(11) **EP 4 794 377 A1**
(43) Date of publication of application: **19.08.2026**
(21) Application number: 24876503.4
(22) Date of filing: 08.10.2024
(51) Int. Cl.: H04W 24/10

(54) **CHANNEL STATE INFORMATION REPORTING METHOD, TERMINAL DEVICE, NETWORK DEVICE, AND STORAGE MEDIUM**

(30) Priority: 09.10.2023 CN 202311304031
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CAO, Yuhua, Beijing 100053 (CN); ZHANG, Jiazhen, Beijing 100053 (CN); LIU, Yongchang, Beijing 100053 (CN); WANG, Fei, Beijing 100053 (CN)
(74) Representative: Herrero & Asociados, S.L.
(86) International application number: PCT/CN2024/123406
(87) International publication number: WO 2025/077689

(57) **Abstract**

Provided in the present application are a channel state information reporting method, a user equipment, a network device, and a storage medium. The method comprises: receiving configuration information about channel state information (CSI) transmitted by a network device and, on the basis of the configuration information, determining CSI of a first type and CSI of a second type; and reporting the CSI of a first type and the CSI of a second type to the network device.

## Description

### CROSS-REFERENCE TO RELATED APPLICATIONS

This application is based on and claims priority to Chinese Patent Application No. 202311304031.1, filed on October 09, 2023, and the entire contents of which are incorporated herein by reference.

### TECHNICAL FIELD

The present disclosure relates to the field of wireless technologies, and in particular, to a channel state information reporting method, a user equipment, a network device, and a storage medium.

### BACKGROUND

In an Artificial Intelligence-based (AI-based) Channel State Information (CSI) compression feedback use case, a user equipment needs to deploy a CSI construction module, while a network device needs to construct a CSI recovery module. The user equipment first measures downlink channel information via a Channel-State Information Reference Signal (CSI-RS), then compresses the downlink channel information into CSI information with a certain payload via the CSI construction module, and further transmits the compressed CSI information to the network device. The network device recovers or reconstructs the received CSI information into the downlink channel information via the CSI recovery module. Besides, the CSI construction module and the CSI recovery module should have a certain associated relationship or correlation or linkage relationship. Ideally, the two modules may ensure that the recovered downlink channel information is exactly the channel information measured by the user equipment.

However, in practical applications, as a data-driven model, an AI model, when being used, may experience performance degradation due to a mismatch between a CSI compression module deployed on the user equipment and the CSI recovery module deployed on a base station caused by changes in configured parameters or operational scenarios. This may result in the CSI data received based on the AI model failing to meet accuracy requirements for the channel information, thereby leading to a degraded network performance.

### SUMMARY

The present disclosure is intended to provide a channel state information reporting method, a user equipment, a network device, and a storage medium, which may guarantee network performance.

A technical solution of the present disclosure may be implemented as follows.

In a first aspect, some embodiments of the present disclosure provide a channel state information reporting method performed by a user equipment. The method include:
receiving configuration information regarding Channel State Information (CSI) transmitted by a network device; determining a first type of CSI and a second type of CSI based on the configuration information; and
reporting the first type of CSI and the second type of CSI to the network device. The method may include:

In a second aspect, some embodiments of the present disclosure provide a channel state information reporting method performed by a network device. The method includes:
configuring configuration information regarding Channel State Information (CSI), and transmitting the configuration information to a user equipment; and
receiving a first type of CSI and a second type of CSI reported by the user equipment.

In a third aspect, some embodiments of the present disclosure provide a user equipment. The user equipment includes:
determining unit, configured to receive configuration information regarding Channel State Information (CSI) transmitted by a network device, and determine a first type of CSI and a second type of CSI based on the configuration information; and
a reporting unit, configured to report the first type of CSI and the second type of CSI to the network device.

In a fourth aspect, some embodiments of the present disclosure provide a network device. The network device includes:
a transmitting unit, configured to configuration information regarding Channel State Information (CSI), and transmit the configuration information to a user equipment; and
a receiving unit, configured to receive a first type of CSI and a second type of CSI reported by the user equipment.

In a fifth aspect, some embodiments of the present disclosure provide a user equipment. The user equipment includes a first processor and a first memory. The first processor, when executing a running program stored in the first memory, is configured to implement the aforementioned channel state information reporting method.

In a sixth aspect, some embodiments of the present disclosure provide a network device. The network device may include a second processor and a second memory. The second processor, when executing a running program stored in the second memory, is configured to implement the aforementioned channel state information reporting method.

In a seventh aspect, some embodiments of the present disclosure provide a storage medium storing a computer program. The computer program, when executed by a processor, is configured to implement the channel state information reporting method performed on the user equipment side as described above; or the computer program, when executed by a processor, is configured to implement the channel state information reporting method performed on the network device side as described above.

Some embodiments of the present disclosure provide a channel state information reporting method, a user equipment, a network device, and a storage medium. The method includes: receiving, by the user equipment, configuration information regarding CSI transmitted by the network device; determining a first type of CSI and a second type of CSI based on the configuration information; and reporting the first type of CSI and the second type of CSI to the network device. The network device may be configured to receive the first type of CSI and the second type of CSI reported by the user equipment, and determine whether to report the first type of CSI based on the first type of CSI and the second type of CSI. With the above implementation solution, the user equipment may be able to determine the first type of CSI and the second type of CSI from the configuration information transmitted by the network device. After the determination of the first type of CSI and the second type of CSI, the user equipment may transmit the two types of CSI to the network device. The network device may then be configured to judge or determine, based on the first type of CSI and the second type of CSI reported by the user equipment, whether the first type of CSI reported by the reporting model is close to or approximates real channel information. This determination result may serve as a basis for evaluating or assessing network performance to determine whether to use the reporting model for reporting. In this way, the report accuracy of the first type of CSI obtained by processing with the reporting model may be ensured, and the network performance may be guaranteed.

### BRIEF DESCRIPTION OF THE DRAWINGS

FIG. 1 is a schematic diagram illustrating a CSI compression feedback use case.
FIG. 2 is a first schematic flowchart of a channel state information reporting method provided in some embodiments of the present disclosure.
FIG. 3 is a second schematic flowchart of a channel state information reporting method provided in some embodiments of the present disclosure.
FIG. 4 is a first schematic structural diagram of a user equipment provided in some embodiments of the present disclosure.
FIG. 5 is a second schematic structural diagram of a user equipment provided in some embodiments of the present disclosure.
FIG. 6 is a first schematic structural diagram of a network device provided in some embodiments of the present disclosure.
FIG. 7 is a second schematic structural diagram of a network device provided in some embodiments of the present disclosure.

### DETAILED DESCRIPTION

To provide a more comprehensive understanding of features and technical contents of some embodiments of the present disclosure, technical solutions of the present disclosure are further described below with reference to the accompanying drawings and specific embodiments. The accompanying drawings are provided only for illustrative purposes and are not intended to limit some embodiments of the present disclosure.

Unless otherwise defined, all technical and scientific terms used in some embodiments of the present disclosure have the same meanings as those commonly understood by those skilled in the art to which the present disclosure pertains. The terms used in some embodiments of the present disclosure are only for the purpose of describing some embodiments of the present disclosure, and are not intended to limit the present disclosure.

In the following description, reference may be made to "some embodiments", which describes a subset of all possible embodiments. However, it should be understood that, "some embodiments" may be the same or different subsets of all possible embodiments, and may be combined with each other without conflict. It should also be noted that, the terms "first/second/third" used in some embodiments of the present disclosure are only for distinguishing similar objects, and do not represent a specific order of the objects. It may be understandable that, the terms "first/second/third" may be interchanged in a specific order or sequence where permissible, enabling some embodiments of the present disclosure described herein to be implemented in an order other than that illustrated or described herein.

In a CSI reporting configuration or CSI reporting setting, a CSI reporting configuration may be associated with at least one CSI resource configuration for channel measurement. A terminal may calculate CSI based on the configured resource and report the calculated CSI to a base station based on the reporting configuration. The report quantity of the CSI configured at the same time or simultaneously may vary, but typically only one or two CSIs are reported each time.

In the related art, researches on air interface AI may include wireless AI. Researches on the wireless AI may include three major use cases including CSI feedback, beam management, and positioning. The researches on the wireless AI may also include methods for AI model deployment, inference, update, simulation evaluation, and the like. The Study Item Description (SID) of the air interface AI use cases are as follows.

| |
|---|
| - a set of initial use cases may include: |
| • CSI feedback enhancement, e.g., overhead reduction, accuracy improvement, prediction [RAN1] |
| • Beam management, e.g., beam prediction in time domain and/or spatial domain to reduce overhead and latency and improve beam selection accuracy [RAN1] |
| • Positioning accuracy enhancement for diverse scenarios, e.g., including scenarios with heavy non-line-of-sight conditions [RAN1] |
| - Finalizing a set of representative use cases (reduced from the initial use cases and minimizing sub-use cases) for characterization and baseline performance evaluation |

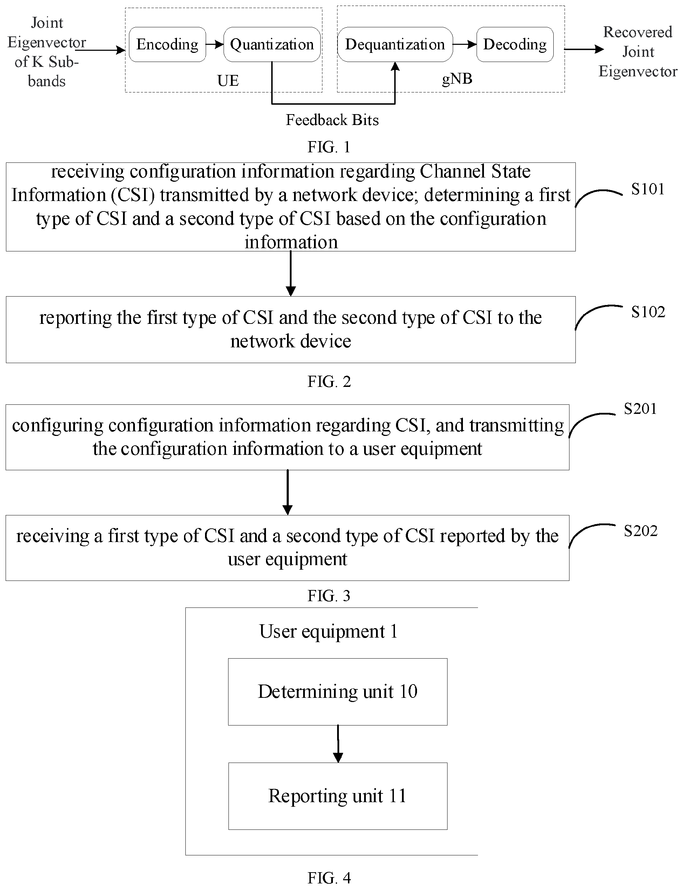

In the related art, in an Al-based CSI compression feedback use case, a user equipment needs to deploy a CSI construction module, while a network device needs to construct a CSI recovery module. The user equipment first measures downlink channel information via a CSI-RS, then compresses the downlink channel information into CSI information with a certain payload via the CSI construction module, and further transmits the compressed CSI information to the network device. The network device recovers or reconstructs the received CSI information into the downlink channel information via the CSI recovery module. Besides, the CSI construction module and the CSI recovery module should have a certain associated relationship or correlation or linkage relationship. Ideally, the CSI construction module and the CSI recovery module may ensure that the recovered downlink channel information is exactly the channel information measured by the user equipment. A schematic diagram of a CSI compression feedback use case may be shown in FIG. 1. As shown in FIG. 1, collected channel information may be recovered by a User Equipment (UE) and a Next Generation Node B (gNB).

However, as a data-driven model, an AI model may experience performance degradation due to a mismatch between a CSI compression module deployed on the user equipment and the CSI recovery module deployed on a base station caused by changes in configured parameters or operational scenarios. Consequently, the accuracy of the channel information recovered based on the AI model may be reduced, thereby leading to a degraded network performance.

To solve the above problem, some embodiments of the present disclosure may provide a channel state information reporting method as shown in FIG. 2. The method may be applied to or performed by a user equipment. The method may include the following operations.

In an operation S101, configuration information about/regarding/related to CSI transmitted by a network device may be received, and a first type of CSI and a second type of CSI may be determined based on the configuration information.

In some embodiments, the user equipment may be referred to as a UE. The user equipment may be a Personal Communication Service (PCS) phone, a cordless phone, a Session Initiation Protocol (SIP) phone, a Wireless Local Loop (WLL) station, a Personal Digital Assistant (PDA), or other devices. The user equipment may also be a smart phone, a tablet computer, a palmtop computer, a Mobile Station (MS), a mobile terminal, or the like. The user equipment may communicate with one or more network devices via a Radio Access Network (RAN). For example, the user equipment may be a mobile phone (also referred to as a "cellular" phone) or a computer having a user equipment. For example, the user equipment may also be a portable, pocket, handheld, computer-built-in, or vehicle-mounted mobile device that exchanges voice and/or data with a radio access network. The user equipment may also be a handheld device, a computing device, or other processing devices connected to a wireless modem, a vehicle-mounted device, a wearable device, or a user equipment in a future evolved network that has a wireless communication function, and the like, which may be not limited in some embodiments of the present disclosure.

In some embodiments of the present disclosure, the network device may be a base station. The base station may be a device configured to provide a wireless communication function for a user equipment. The base station may include but not limited to: an evolutional Node B (abbreviated as eNB or e-NodeB), a macro base station, a micro base station (also referred to as a "small cell"), a pico base station, and the like, in a Long-Term Evolution (LTE) system, a New Radio (NR) system, or a Licensed-Assisted Access using Long-Term Evolution (LAA-LTE) system.

In some embodiments of the present disclosure, the configuration information received by the user equipment from the network device may include configurations indicating one or more CSI reports.

In some embodiments of the present disclosure, a single CSI report including or containing two types of CSI may be supported. The two types of CSI may include AI-based CSI and non-AI-based CSI, respectively.

It should be noted that, in some embodiments of the present disclosure, the first type of CSI may be AI-based CSI. The second type of CSI may be non-AI-based CSI.

It should be noted that, the CSI specified by the first type of CSI and the second type of CSI may also be selected based on actual conditions, which may be not specifically limited in some embodiments of the present disclosure.

In some embodiments of the present disclosure, it is also possible to configure a CSI report to include or contain only/solely AI-based CSI. In this way, the base station may be enabled to control whether to report the solely AI-based CSI based on predetermined criteria, such as configuring periodical CSI reporting, activating/deactivating semi-persistent CSI reporting, or triggering of aperiodic CSI reporting.

In some embodiments of the present disclosure, a plurality of CSI reports may include two CSI reports. In some embodiments, one of the two CSI reports may include one AI-based CSI, and the other of the two CSI reports may include one non-AI-based CSI.

In some embodiments of the present disclosure, the configurations indicating one or more CSI reports may be associated with the same CSI-RS resource.

It should be noted that, in a case where a single CSI report includes two types of CSI, the resource configurations for calculating the two types of CSI are the same CSI resource configuration associated with the single CSI report.

In some embodiments of the present disclosure, the configuration information may further include a report quantity configuration of the second type of CSI, i.e., the configuration information may include a report quantity configuration of the non-AI-based CSI.

In some embodiments, the report quantity configuration of the second type of CSI may at least include a Precoding Matrix Indicator (PMI).

In some embodiments of the present disclosure, the non-AI-based CSI report may at least include a PMI. Parameter combination configured for this type of CSI may ensure a high-precision CSI reporting.

In some embodiments of the present disclosure, after receiving the configuration information transmitted by the network device, since the configuration information configured by the network device includes the CSI-RS information for channel measurement, the user equipment may be configured to perform channel measurement based on the CSI-RS resource transmitted by the network device, and calculate the corresponding first type of CSI and second type of CSI. In this way, the AI-based CSI and the non-AI-based CSI may be calculated and obtained.

In an operation S102, the first type of CSI and the second type of CSI may be reported to the network device.

In some embodiments of the present disclosure, the user equipment may be configured to determine, based on the configuration information transmitted by the network device, the AI-based CSI and the non-AI-based CSI that are needed to be reported and that correspond to the configuration information, and report the determined AI-based CSI and non-AI-based CSI to the network device.

In some embodiments of the present disclosure, when reporting the AI-based CSI and the non-AI-based CSI, the AI-based CSI and the non-AI-based CSI may be reported based on a report configuration type configured by the network device. The report configuration type may include aperiodic reporting or semi-persistent reporting.

In some embodiments of the present disclosure, when reporting the first type of CSI and the second type of CSI to the network device, the first type of CSI and the second type of CSI may be reported to the network device in a periodic, aperiodic, or semi-persistent reporting manner. That is, the AI-based CSI and the non-AI-based CSI may be reported to the network device in a periodic, aperiodic, or semi-persistent reporting manner.

In some embodiments of the present disclosure, when the two types of CSI are obtained from or contained in different CSI reports, in case that time-domain behaviors of the two CSI reports are both aperiodic, the base station may trigger the two CSI reports via Downlink Control Information (DCI); in case that the time-domain behaviors of the two CSI reports are both semi-persistent, the base station may activate the two CSI reports via a single MAC Control Element (MAC CE). In some embodiments, the two CSI reports are configured with a correlation or linkage relationship. The linkage relationship may be configured to compare and determine whether the performance of AI meets requirements. In other words, since the two types of CSI are contained in two different CSI reports, the correlation or linkage relationship between the two CSI reports needs to be configured, to calculate the reported two types of CSI and compare and determine whether the performance of AI meets the requirements.

In some embodiments of the present disclosure, the performance of AI may be monitored by utilizing a combination of the two types of CSI. For example, in a case where the combined two types of CSI include the periodic (P)/semi-persistent (SP) AI-based CSI and the aperiodic (AP) non-AI-based CSI, it is possible to quickly monitor and determine whether the performance of AI is ideal or optimal.

In a case where the combined two types of CSI include the P/SP non-AI-based CSI and the AP AI-based CSI, it is possible to monitor whether the AI mode is capable of being enabled.

In a case where the combined two types of CSI include the AP non-AI-based CSI and the AP AI-based CSI, it is possible to quickly determine which mode to be enabled. In some embodiments, the resource configuration associated with the AP CSI may be different from the resource configuration associated with the P/SP CSI, and the P/SP CSI cannot be reused or multiplexed.

In a case where the combined two types of CSI include the P/SP non-AI-based CSI and the P/SP AI-based CSI, it is possible to monitor the performance of AI periodically.

It may be understood that, in the channel state information reporting method provided in some embodiments of the present disclosure, the user equipment may be able to determine the first type of CSI and the second type of CSI from the configuration information transmitted by the network device. After the determination of the first type of CSI and the second type of CSI, the user equipment may transmit the two types of CSI to the network device. The network device may then be configured to judge or determine, based on the first type of CSI and the second type of CSI reported by the user equipment, whether the first type of CSI reported by the reporting model is close to or approximates real channel information. This determination result may serve as a basis for evaluating or assessing network performance to determine whether to use the reporting model for reporting. In this way, the report accuracy of the first type of CSI obtained by processing with the reporting model may be ensured, and the network performance may be guaranteed.

In some embodiments of the present disclosure, considering that the uplink resources configured by the network device or the maximum number of available Central Processing Units (CPUs) of the user equipment are limited, it is necessary to design a priority level or priority of the CSI report to ensure that a higher-priority CSI report has sufficient uplink resource to carry the CSI report quantity configuration, or has sufficient CPU to calculate the CSI.

In some embodiments of the present disclosure, the design of the priorities ("priority" is also described as "priority level") of the two types of CSI may include: receiving parameter information regarding the priorities of the first type of CSI and the second type of CSI transmitted by the network device; determining, based on the parameter information, a first priority of the first type of CSI and a second priority of the second type of CSI; determining a priority order based on the first priority and the second priority; and reporting the first type of CSI and the second type of CSI based on or in accordance with the priority order.

In some embodiments of the present disclosure, the parameter information may include priority information corresponding to the first type of CSI and the second type of CSI. That is, the network device may be configured to directly set or configure the priority information for the first type of CSI and the second type of CSI. The user equipment may be configured to receive the priority information transmitted by the network device and determine the first priority and the second priority of the two types of CSI based on the priority information.

In some embodiments of the present disclosure, the parameter information may also include report parameters of the CSI reports corresponding to different types of CSI. The report parameters may include a cell number in a base station, a CSI reporting type, a reporting configuration ID, whether to report based on AI, and the like. The parameter information may also include parameter information indicated by the base station via Radio Resource Control (RRC), a MAC Control Element (MAC CE), or DCI. That is, the user equipment may receive several report parameters transmitted by the network device or parameter information indicated by the network device, and determine the first priority and the second priority of the two types of CSI, respectively.

In some embodiments of the present disclosure, after obtaining the first priority and the second priority, the priority order for reporting the two types of CSI may be determined based on the first priority and the second priority. That is, the CSI with a higher priority may be reported first, and the CSI with a lower priority may be reported later.

In some embodiments of the present disclosure, in a case where the first type of CSI and the second type of CSI are contained in the same CSI report, determining, based on the parameter information, the first priority of the first type of CSI and the second priority of the second type of CSI may include the following operations: determining, from the parameter information, priority information regarding the first priority of the first type of CSI and the second priority of the second type of CSI; and determining, based on the priority information, the first priority of the first type of CSI and the second priority of the second type of CSI.

In some embodiments of the present disclosure, in a case where the first type of CSI and the second type of CSI are contained in the same CSI report, the user equipment may receive the priority information regarding the first priority of the first type of CSI and the second priority of the second type of CSI configured by the network device. In some embodiments, the priority information may include the first priority of the first type of CSI and the second priority of the second type of CSI. In this way, the priorities of the two types of CSI may be directly determined.

In some embodiments of the present disclosure, in the design of the priorities of the two types of CSI, in a case where the AI-based CSI has a higher priority, since the AI-based CSI usually has better performance than the non-AI-based CSI, assigning or giving the AI-based CSI a higher priority may increase the probability that the base station obtains the CSI with a higher accuracy.

In a case where the non-AI-based CSI has a higher priority, assigning or giving the non-AI-based CSI a higher priority may enable the base station to combine the non-AI-based CSI with another CSI report containing solely AI-based CSI to compare the performance of AI model in a case where only the non-AI-based CSI is reported successfully.

In some embodiments of the present disclosure, in a case where the first type of CSI and the second type of CSI are contained in two different CSI reports, determining, based on the parameter information, the first priority of the first type of CSI and the second priority of the second type of CSI may include the following operations: determining, from the parameter information, a first CSI report parameter of a first CSI report corresponding to the first type of CSI and a second CSI report parameter of a second CSI report corresponding to the second type of CSI, where the two different CSI reports have a correlation or linkage relationship; determining, based on a preset rule and the first CSI report parameter, a first operation result (operation result may also referred as "calculation result" hereafter); determining, based on the preset rule and the second CSI report parameter, a second operation result; determining, in a case where the first operation result is lower than the second operation result, the priority order as the first priority of the first type of CSI being higher than or over the second priority of the second type of CSI; or determining, in a case where the first operation result is higher than the second operation result, the priority order as the first priority of the first type of CSI being lower than or below the second priority of the second type of CSI; and determining, in a case where the first operation result is equal to the second operation result, the priority order as the first priority of the first type of CSI being equal to the second priority of the second type of CSI.

In some embodiments of the present disclosure, in a case where the first type of CSI and the second type of CSI are contained in two different CSI reports, the user equipment may be configured to calculate, based on several report parameters or indicated parameter information transmitted by the network device, the first priority and the second priority of the two types of CSI, respectively.

It should be noted that the two different CSI reports have a certain correlation or linkage relationship. The resource configurations included in or associated with the two CSI reporting configurations may be consistent with each other.

In some embodiments of the present disclosure, considering that the AI-based CSI report and the non-AI-based CSI report may coexist in the network, corresponding rules may be established: the priority of a CSI report may be calculated based on a formula specified or prescribed by the preset rule, and may be related to factors such as a base station cell ID, a CSI reporting type (e.g., periodic reporting, aperiodic reporting, semi-persistent reporting carried on a Physical Uplink Control Channel (PUCCH), semi-persistent reporting carried on a Physical Uplink Shared Channel (PUSCH)), a reporting configuration ID, and whether the reported CSI is AI-based. Or, in some embodiments, the priority of the CSI report may be indicated by the base station via RRC, MAC CE, or DCI.

In some embodiments of the present disclosure, the first CSI report may be utilized to report the first type of CSI. The second CSI report may be utilized to report the second type of CSI. The first CSI report parameter of the first type of CSI and the second CSI report parameter of the second type of CSI may be obtained from or contained in the parameter information. The first CSI report parameter and the second CSI report parameter may include the parameter information in the above rule.

In some embodiments of the present disclosure, the priorities of the two types of CSI may be determined by combining the preset rule and the parameter information.

In some embodiments, in order to increase the priority of the AI-based CSI and ensure that the AI-based CSI has a greater opportunity to occupy the CPU or the uplink resource, the priority of a CSI report may be related to or determined based on whether the CSI is AI-based. In some embodiments, the priority of the AI-based CSI may be calculated by using the following formula (1): ${Pri}_{iCSI} \left(y, k, c, s, x\right) = 6 ⋅ {N}_{cells} ⋅ {M}_{s} ⋅ x + 2 ⋅ {N}_{cells} ⋅ {M}_{s} ⋅ y + {N}_{cells} ⋅ {M}_{s} ⋅ k + {M}_{s} ⋅ c + s$

In some embodiments, for an AI-based CSI report, x=0; and for a non-AI-based CSI report, x=1.

For an aperiodic CSI report carried on a PUSCH, y=0; for a semi-persistent CSI report carried on a PUSCH, y=1; for a semi-persistent CSI report carried on a PUCCH, y=2; and for a periodic CSI report carried on a PUCCH, y=3.

For a CSI report carrying L1-Reference Signal Receiving Power (RSRP) or L1-Signal to Interference Noise Ratio (SINR), k=0; and for a CSI report without carrying L1-RSRP or L1-SINR, k=1.

c may be a serving cell index configured by the high-layer signaling. *N_{cells}* may be a value of the high-layer parameter maxNrofServingCells.

s may be a reportConfigID configured by high-layer signaling. *Mₛ* may be a value of the high-layer parameter maxNrofCSI-ReportConfigurations.

By using the above formula (1) and the parameter information, the first operation result and the second operation result may be calculated. The first type of CSI report may be denoted as CSI report #1. The second type of CSI report may be denoted as CSI report #2. In a case where the first operation result Pr i_{iCS}(_{I} y,k,c,s,x)#1calculated by the CSI report #1 based on the above formula (1) is lower than the second operation result Pr i_{iCS}(_{I} y,k,c,s,x)#2 corresponding to the CSI report #2, the first priority of the CSI report #1 may be higher than the second priority of the CSI report #2.

In a case where the first operation result Pr i_{iCS}(_{I} y,k,c,s,x)#1calculated by the CSI report #1 based on the above formula (1) is higher than the second operation result Pr i_{iCS}(_{I} y,k,c,s,x)#2 corresponding to the CSI report #2, the first priority of the CSI report #1 may be lower than the second priority of the CSI report #2.

In a case where the first operation result Pr i_{iCS}(_{I} y,k,c,s,x)#1calculated by the CSI report #1 based on the above formula (1) is equal to the second operation result Pr i_{iCS}(_{I} y,k,c,s,x)#2 corresponding to the CSI report #2, the first priority of the CSI report #1 may be equal to the second priority of the CSI report #2.

In some embodiments, the base station flexibly may control the priority of a CSI report by indicating the value of a certain factor in the priority calculation formula of the CSI report. The priority of the CSI report may be calculated by the following formula (2): ${Pri}_{iCSI} \left(y, k, c, s, f\right) = 6 ⋅ {N}_{cells} ⋅ {M}_{s} ⋅ f + 2 ⋅ {N}_{cells} ⋅ {M}_{s} ⋅ y + {N}_{cells} ⋅ {M}_{s} ⋅ k + {M}_{s} ⋅ c + s$

Here, f may be a priority weight factor. The base station may indicate the priority weight factor to the user equipment UE via RRC, MAC CE, or DCI.

It should be noted that, the value of f may be related to or determined based on whether the CSI is AI-based.

It should be noted that, the meanings of other parameters may refer to those indicated in the above formula (1), and may be not repeated here.

Similarly, the first operation result and the second operation result corresponding to the two CSI reports may be calculated by using the formula (2). The priorities of the two types of CSI may be determined based on the first operation result and the second operation result.

It should be noted that, the manner of determining the priorities of the two types of CSI based on the first operation result and the second operation result may refer to the manner of judging based on the operation results in the formula (1) in the above embodiments, and may be not repeated here.

In some embodiments of the present disclosure, after the first priority of the first type of CSI and the second priority of the second type of CSI are determined, the first type of CSI and the second type of CSI may be reported to the network device in sequence based on the priority order.

In some embodiments of the present disclosure, the user equipment may also need to determine a first number of bits that the uplink resource configured by the network device is capable of carrying and a second number of bits occupied by the first type of CSI and the second type of CSI reported by the user equipment. In a case where the first number of bits is less than the second number of bits and the first priority is lower than the second priority, the first type of CSI may be discarded or omitted. In a case where the first number of bits is less than the second number of bits and the first priority is higher than the second priority, the second type of CSI may be discarded or omitted.

In some embodiments of the present disclosure, in a case where the first number of bits of the available uplink resource limit configured by the network device is less than the second number of bits carried by the AI and the first priority of the AI-based CSI is lower than the second priority of the non-AI-based CSI, the AI-based CSI may be completely discarded or omitted. The non-AI-based CSI may be arranged in a traditional priority manner, that is, the non-AI-based CSI may be transmitted based on the existing protocol. In a case where the first number of bits of the available uplink resource limit configured by the network device is less than the second number of bits carried by the AI and the second priority of the non-AI-based CSI is lower than the first priority of the AI-based CSI, the non-AI-based CSI may be discarded or omitted.

It should be noted that, the AI-based CSI may be completely discarded or omitted. The non-AI-based CSI may be partially discarded or omitted. The non-discarded or non-omitted portion of the non-AI-based CSI may be arranged in a traditional priority manner.

In some embodiments of the present disclosure, the user equipment may further transmit a performance parameter threshold to the network device. In some embodiments, the performance parameter threshold may be associated with the first type of CSI and/or the second type of CSI, so that the network device may determine whether to perform the CSI reporting based on the performance parameter threshold.

Based on the above embodiments, some embodiments of the present disclosure may further provide a channel state information reporting method as shown in FIG. 3. The method may be applied to or performed by a network device. The method may include the following operations.

In an operation S201, configuration information regarding CSI may be configured, and the configuration information may be transmitted to a user equipment.

In some embodiments of the present disclosure, the configuration information configured by the network device may include configurations indicating one or more CSI reports.

In some embodiments of the present disclosure, a CSI report may include two types of CSI, namely AI-based CSI and non-AI-based CSI, respectively.

In some embodiments of the present disclosure, a plurality of CSI reports may include two CSI reports. In some embodiments, one of the two CSI reports may include one AI-based CSI, and the other of the two CSI reports may include one non-AI-based CSI.

In some embodiments of the present disclosure, the configurations indicating one or more CSI reports may be associated with the same CSI-RS resource.

In some embodiments of the present disclosure, the configuration information may further include a report quantity configuration of the second type of CSI.

In some embodiments, the report quantity configuration of the second type of CSI may at least include a PMI.

In some embodiments of the present disclosure, the network device may be configured to transmit the configured configuration information regarding/for CSI to the user equipment. In this way, the user equipment may be enabled to determine the first type of CSI and the second type of

CSI to be reported based on the configuration information.

In an operation S202, the first type of CSI and the second type of CSI reported by the user equipment may be received.

In some embodiments of the present disclosure, after the user equipment determines the first type of CSI and the second type of CSI to be reported based on the CSI configuration information transmitted by the network device, the user equipment may transmit the first type of CSI and the second type of CSI to the network device. The network device may determine whether to report the first type of CSI based on the received first type of CSI and second type of CSI.

In some embodiments of the present disclosure, the network device may determine whether to report the first type of CSI based on the first type of CSI and the second type of CSI.

In some embodiments of the present disclosure, after receiving the first type of CSI and the second type of CSI transmitted by the user equipment, the network device may be further configured to receive a performance parameter threshold transmitted by the user equipment. The network device may be configured to determine whether to report the first type of CSI based on the performance parameter threshold, the first type of CSI, and the second type of CSI.

In some embodiments, the performance parameter threshold may be associated with the first type of CSI and/or the second type of CSI.

In some embodiments of the present disclosure, the performance parameter threshold may be transmitted by the user equipment to the network device in a reporting manner.

In some embodiments of the present disclosure, the network device may compare the first type of CSI and the second type of CSI with the performance parameter threshold, determine whether the performance of AI meets the CSI reporting condition. In a case where the performance of AI meets the requirement, the AI model may be used for the reporting of the first type of CSI. Otherwise, the AI model may not be used for the reporting of the first type of CSI.

In some embodiments of the present disclosure, determining whether to report the first type of CSI based on the performance parameter threshold, the first type of CSI, and the second type of CSI may include the following operations: first performing Sequential Gaussian Conditional Simulation (SGCS) or calculating Normalized Mean Square Error (NMSE) of the first type of CSI and the second type of CSI, and comparing the calculated SGCS/NMSE with a performance parameter threshold corresponding to SGCS/NMSE. In a case where the calculated SGCS/NMSE of the two types of CSI are less than the performance parameter threshold corresponding to SGCS/NMSE, it indicates that the performance of AI fails to meet the requirement and does not satisfy the CSI reporting condition. In this case, the reporting of the first type of CSI may be not performed. On the contrary, it indicates that the reporting of the first type of CSI may be performed.

In some embodiments of the present disclosure, the performance parameter threshold may also be preconfigured by the network device. Then, the network device may determine whether to report the first type of CSI based on the preset performance parameter threshold preconfigured by the network device, the first type of CSI, and the second type of CSI.

It should be noted that, the calculation method for determining whether the CSI reporting condition is satisfied based on the preset performance parameter threshold preconfigured by the network device, the first type of CSI, and the second type of CSI to determine whether to report the first type of CSI may refer to the description in the above embodiments, and may be not repeated here.

In some embodiments of the present disclosure, the comparison result between the SGCS/NMSE corresponding to the first type of CSI and the second type of CSI and the performance parameter threshold corresponding to SGCS/NMSE may be a long-term statistical result. The network device may determine whether the performance of AI meets the requirement based on the long-term statistical result.

In some embodiments of the present disclosure, the performance of AI model may be effectively monitored through the set detection method, thereby helping the network to perform the lifecycle management of the model, including activation/deactivation, switching, and fallback of the model. By monitoring whether the CSI recovered based on the AI model is sufficiently close to or approximates the real channel or the measured channel, it may be ensured that the deployed model may be used to obtain channel information with sufficient precision or accuracy, thereby ensuring the network performance.

In some embodiments of the present disclosure, the network device may be configured to configure parameter information regarding priorities of the first type of CSI and the second type of CSI, and transmit the parameter information to the user equipment. In this way, the user equipment may be enabled to determine, based on the parameter information, a first priority of the first type of CSI and a second priority of the second type of CSI; and determine a priority order based on the first priority and the second priority.

In some embodiments of the present disclosure, the parameter information may include priority information corresponding to the first type of CSI and the second type of CSI. That is, the network device may be configured to directly set or configure the priority information for the first type of CSI and the second type of CSI. The user equipment may be configured to receive the priority information transmitted by the network device and determine the first priority and the second priority of the two types of CSI based on the priority information.

In some embodiments of the present disclosure, the parameter information may also include report parameters of the CSI reports corresponding to different types of CSI. The report parameters may include a cell number in a base station, a CSI reporting type, a reporting configuration ID, whether to report based on AI, and the like. The parameter information may also include parameter information indicated by the base station via RRC, a MAC CE, or DCI. That is, the user equipment may receive several report parameters transmitted by the network device or parameter information indicated by the network device, and determine the first priority and the second priority of the two types of CSI, respectively.

In some embodiments of the present disclosure, the network device may configure the above parameter information and transmit the above parameter information to the user equipment. In this way, the user equipment may determine the first priority of the first type of CSI and the second priority of the second type of CSI based on the configured parameter information, and determine the priority order based on the first priority and the second priority.

In some embodiments of the present disclosure, in a case where the first type of CSI and the second type of CSI are contained in the same CSI report, priority information regarding the first priority of the first type of CSI and the second priority of the second type of CSI may be configured in the parameter information. The parameter information may be transmitted to the user equipment. In this way, the user equipment may be enabled to determine the first priority of the first type of CSI and the second priority of the second type of CSI based on the parameter information, and determine the priority order based on the first priority and the second priority.

In some embodiments of the present disclosure, in a case where the first type of CSI and the second type of CSI are contained in the same CSI report, the network device may directly configure the priority information regarding the two types of CSI and transmit the priority information to the user equipment.

In some embodiments of the present disclosure, in a case where the first type of CSI and the second type of CSI are contained in two different CSI reports, a first CSI report parameter of a first CSI report corresponding to the first type of CSI and a second CSI report parameter of a second CSI report corresponding to the second type of CSI may be configured in the parameter information. Then, the first CSI report parameter and the second CSI report parameter may be transmitted to the user equipment. In this way, the user equipment may be enabled to determine the first priority of the first type of CSI and the second priority of the second type of CSI based on the first CSI report parameter and the second CSI report parameter, and determine the priority order based on the first priority and the second priority.

In some embodiments of the present disclosure, in a case where the first type of CSI and the second type of CSI are contained in two different CSI reports, the network device may configure the report parameter or indicate the parameter information and transmit the report parameter or the parameter information to the user equipment. In some embodiments, the report parameters may be related to factors such as a base station cell ID, a CSI reporting type (periodic reporting, aperiodic reporting, semi-persistent reporting on a PUCCH, semi-persistent reporting on a PUSCH), a reporting configuration ID, and whether the reported CSI is AI-based. Or, in some embodiments, the parameter information may be indicated by the base station via RRC, MAC CE, or DCI. The user equipment may determine the priority order of the first type of CSI and the second type of CSI based on the report parameter.

In some embodiments of the present disclosure, the network device may be configured to configure an uplink resource. The uplink resource may be configured to enable the user equipment to determine whether to discard or omit the first type of CSI or the second type of CSI based on a first number of bits that the uplink resource is capable of carrying.

In some embodiments of the present disclosure, the network device may configure the first number of bits that can be carried based on an actual condition, and transmit the configured first number of bits to the user equipment.

In some embodiments, the first number of bits may be the maximum number of bits that the network device is capable of carrying or able to carry.

It should be noted that, the implementation process of the user equipment to determine whether to discard or omit the first type of CSI or the second type of CSI based on the first number of bits that the uplink resource is capable of carrying may refer to the description in the above embodiments, and may be not repeated here.

It may be understood that, in the channel state information reporting method provided in some embodiments of the present disclosure, the user equipment may be configured to determine the first type of CSI and the second type of CSI from the configuration information transmitted by the network device. After the determination of the first type of CSI and the second type of CSI, the user equipment may transmit the two types of CSI to the network device. The network device may then be configured to judge or determine, based on the first type of CSI and the second type of CSI reported by the user equipment, whether the first type of CSI reported by the reporting model is close to or approximates real channel information. This determination result may serve as a basis for evaluating or assessing network performance to determine whether to use the reporting model for reporting. In this way, the report accuracy of the first type of CSI obtained by processing with the reporting model may be ensured, and the network performance may be guaranteed.

Based on the above embodiments, by utilizing a smaller overhead of reference signal and CSI reporting, it is possible to monitor whether the CSI recovered based on the AI model is sufficiently close to the actual channel or the measured channel. In a case where the CSI precision or accuracy is insufficient, it may be possible to switch to another model, update the model, or perform model fallback (i.e., switch to a traditional CSI reporting method). This may ensure that the network may obtain channel information with sufficient precision or accuracy, thereby ensuring the network performance.

Based on the above embodiments, some embodiments of the present disclosure may provide a user equipment 1. As shown in FIG. 4, the user equipment 1 may include a determining unit 10 and a reporting unit 11.

The determining unit 10 may be configured to receive configuration information regarding CSI transmitted by a network device, and determine a first type of CSI and a second type of CSI based on the configuration information.

The reporting unit 11 may be configured to report the first type of CSI and the second type of CSI to the network device.

In some embodiments, the user equipment 1 may further include a receiving unit.

The receiving unit may be configured to receive parameter information regarding priorities of the first type of CSI and the second type of CSI transmitted by the network device.

The determining unit 10 may be further configured to determine, based on the parameter information, a first priority of the first type of CSI and a second priority of the second type of CSI, and determine a priority order based on the first priority and the second priority.

The reporting unit 11 may be further configured to report the first type of CSI and the second type of CSI based on or in accordance with the priority order.

In some embodiments, the determining unit 10 may be further configured to, in a case where the first type of CSI and the second type of CSI are contained in the same CSI report, determine, from the parameter information, priority information regarding the first priority of the first type of CSI and the second priority of the second type of CSI; and determine the first priority of the first type of CSI and the second priority of the second type of CSI based on the priority information.

In some embodiments, the determining unit 10 may be further configured to, in a case where the first type of CSI and the second type of CSI are contained in two different CSI reports, determine, from the parameter information, a first CSI report parameter of a first CSI report corresponding to the first type of CSI and a second CSI report parameter of a second CSI report corresponding to the second type of CSI, where the two different CSI reports have a correlation or linkage relationship; determine, based on a preset rule and the first CSI report parameter, a first operation result; determine, based on the preset rule and the second CSI report parameter, a second operation result; determine, in a case where the first operation result is lower than the second operation result, the priority order as the first priority of the first type of CSI being higher than or over the second priority of the second type of CSI; or determine, in a case where the first operation result is higher than the second operation result, the priority order as the first priority of the first type of CSI being lower than or below the second priority of the second type of CSI; or determine, in a case where the first operation result is equal to the second operation result, the priority order as the first priority of the first type of CSI being equal to the second priority of the second type of CSI.

In some embodiments, the determining unit 10 may be further configured to determine a first number of bits that the uplink resource configured by the network device is capable of carrying and a second number of bits occupied by the first type of CSI and the second type of CSI reported by the user equipment; discard or omit the first type of CSI in a case where the first number of bits is less than the second number of bits and the first priority is lower than the second priority; or discard or omit the second type of CSI in a case where the first number of bits is less than the second number of bits and the first priority is higher than the second priority.

In some embodiments, the configuration information may include configurations indicating one or more CSI reports. The configurations indicating one or more CSI reports may be associated with the same CSI-RS resource.

In some embodiments, the configuration information may include a report quantity configuration of the second type of CSI. The report quantity configuration of the second type of CSI may at least include a PMI.

In some embodiments, the reporting unit 11 may be further configured to report the first type of CSI and the second type of CSI to the network device in a periodic, aperiodic, or semi-persistent reporting manner.

In some embodiments, the user equipment 1 may further include a transmitting unit.

The transmitting unit may be configured to transmit a performance parameter threshold to the network device. The performance parameter threshold may be associated with the first type of CSI and/or the second type of CSI.

The user equipment provided in some embodiments of the present disclosure may be configured to receive the configuration information regarding the CSI transmitted by the network device, determine the first type of CSI and the second type of CSI based on the configuration information, and report the first type of CSI and the second type of CSI to the network device. It may be seen that, the user equipment provided in some embodiments of the present disclosure may be configured to determine the first type of CSI and the second type of CSI from the configuration information transmitted by the network device. After the determination of the first type of CSI and the second type of CSI, the user equipment may transmit the two types of CSI to the network device. The network device may then be configured to judge or determine, based on the first type of CSI and the second type of CSI reported by the user equipment, whether the first type of CSI reported by the reporting model is close to or approximates real channel information. This determination result may serve as a basis for evaluating or assessing network performance to determine whether to use the reporting model for reporting. In this way, the report accuracy of the first type of CSI obtained by processing with the reporting model may be ensured, and the network performance may be guaranteed.

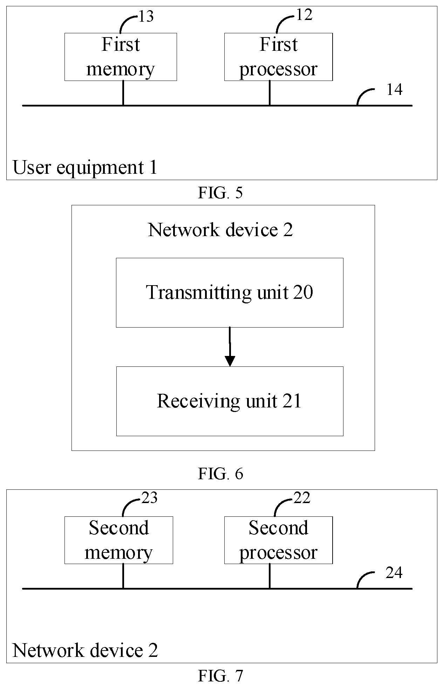

FIG. 5 is a schematic diagram illustrating a configuration structure of a user equipment 1 provided in some embodiments of the present disclosure. In practical applications, based on the same disclosed concept as the above embodiments, as shown in FIG. 5, the user equipment 1 in some embodiments of the present disclosure may include a first processor 12, a first memory 13, and a first communication bus 14.

In the process of some embodiments, the first processor 12 may be at least one of an Application Specific Integrated Circuit (ASIC), a Digital Signal Processor (DSP), a Digital Signal Processing Device (DSPD), a Programmable Logic Device (PLD), a Field Programmable Gate Array (FPGA), a CPU, a controller, a microcontroller, and a microprocessor. It may be understandable that, for different devices, the electronic device configured to achieve the functions of the above processor may also be other types, which may be not limited in some embodiments of the present disclosure.

In some embodiments of the present disclosure, the first communication bus 14 may be configured to achieve the connection and communication between the first processor 12 and the first memory 13. The first processor 12, when executing a running program stored in the first memory 13, may be configured to implement a channel state information reporting method.

The method may include the following operations: receiving configuration information regarding CSI transmitted by a network device; determining a first type of CSI and a second type of CSI based on the configuration information; and reporting the first type of CSI and the second type of CSI to the network device.

In some embodiments, the first processor 12 may be further configured to receive parameter information regarding priorities of the first type of CSI and the second type of CSI transmitted by the network device; determine, based on the parameter information, a first priority of the first type of CSI and a second priority of the second type of CSI; determine a priority order based on the first priority and the second priority; and report the first type of CSI and the second type of CSI based on or in accordance with the priority order.

In some embodiments, the first processor 12 may be further configured to: in a case where the first type of CSI and the second type of CSI are contained in the same CSI report, determine, from the parameter information, priority information regarding the first priority of the first type of CSI and the second priority of the second type of CSI; and determine, based on the priority information, the first priority of the first type of CSI and the second priority of the second type of CSI.

In some embodiments, the first processor 12 may be further configured to: in a case where the first type of CSI and the second type of CSI are contained in two different CSI reports, determine, from the parameter information, a first CSI report parameter of a first CSI report corresponding to the first type of CSI and a second CSI report parameter of a second CSI report corresponding to the second type of CSI, where the two different CSI reports have a correlation or linkage relationship; determine, based on a preset rule and the first CSI report parameter, a first operation result; determine, based on the preset rule and the second CSI report parameter, a second operation result; determine, in a case where the first operation result is lower than the second operation result, the priority order as the first priority of the first type of CSI being higher than or over the second priority of the second type of CSI; or determine, in a case where the first operation result is higher than the second operation result, the priority order as the first priority of the first type of CSI being lower than or below the second priority of the second type of CSI; or determine, in a case where the first operation result is equal to the second operation result, the priority order as the first priority of the first type of CSI being equal to the second priority of the second type of CSI.

In some embodiments, the first processor 12 may be further configured to: determine a first number of bits that the uplink resource configured by the network device is capable of carrying and a second number of bits occupied by the first type of CSI and the second type of CSI reported by the user equipment; discard or omit the first type of CSI in a case where the first number of bits is less than the second number of bits and the first priority is lower than the second priority; or discard or omit the second type of CSI in a case where the first number of bits is less than the second number of bits and the first priority is higher than the second priority.

In some embodiments, the configuration information may include configurations indicating one or more CSI reports. The configurations indicating one or more CSI reports may be associated with the same CSI-RS resource.

In some embodiments, the configuration information may include a report quantity configuration of the second type of CSI. The report quantity configuration of the second type of CSI may at least include a PMI.

In some embodiments, the first processor 12 may be further configured to report the first type of CSI and the second type of CSI to the network device in a periodic, aperiodic, or semi-persistent reporting manner.

In some embodiments, the first processor 12 may be further configured to transmit a performance parameter threshold to the network device. The performance parameter threshold may be associated with the first type of CSI and/or the second type of CSI.

Some embodiments of the present disclosure may further provide a network device 2. As shown in FIG. 6, the network device 2 may include a transmitting unit 20 and a receiving unit 21.

The transmitting unit 20 may be configured to configure configuration information regarding CSI, and transmit the configuration information to a user equipment.

The receiving unit 21 may be configured to receive a first type of CSI and a second type of CSI reported by the user equipment.

In some embodiments, the network device 2 may further include a configuring unit.

The configuring unit may be configured to configure parameter information regarding priorities of the first type of CSI and the second type of CSI, and transmit the parameter information to the user equipment. In this way, the user equipment may be enabled to determine, based on the parameter information, a first priority of the first type of CSI and a second priority of the second type of CSI; and determine a priority order based on the first priority and the second priority.

In some embodiments, the configuring unit may be further configured to: in a case where the first type of CSI and the second type of CSI are contained in the same CSI report, configure, in the parameter information, priority information regarding the first priority of the first type of CSI and the second priority of the second type of CSI, and transmit the parameter information to the user equipment. In this way, the user equipment may be enabled to determine the first priority of the first type of CSI and the second priority of the second type of CSI based on the parameter information, and determine the priority order based on the first priority and the second priority.

In some embodiments, the configuring unit may be further configured to: in a case where the first type of CSI and the second type of CSI are contained in two different CSI reports, configure, in the parameter information, a first CSI report parameter of a first CSI report corresponding to the first type of CSI and a second CSI report parameter of a second CSI report corresponding to the second type of CSI, and transmit the first CSI report parameter and the second CSI report parameter to the user equipment. In this way, the user equipment may be enabled to determine the first priority of the first type of CSI and the second priority of the second type of CSI based on the first CSI report parameter and the second CSI report parameter, and determine the priority order based on the first priority and the second priority.

In some embodiments, the configuring unit may be further configured to configure an uplink resource. The uplink resource may be configured to enable the user equipment to determine whether to discard or omit the first type of CSI or the second type of CSI based on a first number of bits that the uplink resource is capable of carrying.

In some embodiments, the configuration information may include configurations indicating one or more CSI reports. The configurations indicating one or more CSI reports may be associated with the same CSI-RS resource.

In some embodiments, the configuration information may include a report quantity configuration of the second type of CSI. The report quantity configuration of the second type of CSI may at least include a PMI.

In some embodiments, the receiving unit 21 may be further configured to: receive a performance parameter threshold transmitted by the user equipment. The performance parameter threshold may be associated with the first type of CSI and/or the second type of CSI.

The network device provided in some embodiments of the present disclosure may be configured to configure the configuration information regarding the CSI and transmit the configuration information to the user equipment; receive the first type of CSI and the second type of CSI reported by the user equipment; and determine whether to report the first type of CSI based on the first type of CSI and the second type of CSI. It may be seen that, the network device provided in some embodiments of the present disclosure may transmit the configuration information to the user equipment. The user equipment may determine the first type of CSI and the second type of CSI based on the configuration information and transmit the two types of CSI to the network device after the determination of the first type of CSI and the second type of CSI. The network device may be able to or determine, based on the first type of CSI and the second type of CSI reported by the user equipment, whether the first type of CSI reported by the reporting model is close to or approximates the actual channel information. Then, the determination result may serve as a basis for evaluating or assessing network performance to determine whether to use the reporting model for reporting. In this way, the report accuracy of the first type of CSI obtained by processing with the reporting model may be ensured, and the network performance may be guaranteed.

FIG. 7 is a schematic diagram illustrating a configuration structure of a network device 2 provided in some embodiments of the present disclosure. In practical applications, based on the same disclosed concept as the above embodiments, as shown in FIG. 7, the network device 2 in some embodiments of the present disclosure may include a second processor 22, a second memory 23, and a second communication bus 24.

In the process of some embodiments, the second processor 22 may be at least one of an ASIC, a DSP, a DSPD, a PLD, a FPGA, a CPU, a controller, a microcontroller, and a microprocessor. It may be understandable that, for different devices, the electronic device configured to achieve the functions of the above processor may also be other types, which may be not limited in some embodiments of the present disclosure.

In some embodiments of the present disclosure, the second communication bus 24 may be configured to achieve the connection and communication between the second processor 22 and the second memory 23. The second processor 22, when executing a running program stored in the second memory 23, may be configured to implement the channel state information reporting method.

The method may include the following operations: configuring configuration information regarding CSI; transmitting the configuration information to a user equipment; and receiving a first type of CSI and a second type of CSI reported by the user equipment.

In some embodiments, the second processor 22 may be further configured to: configure parameter information regarding priorities of the first type of CSI and the second type of CSI, and transmit the parameter information to the user equipment. In this way, the user equipment may be enabled to determine, based on the parameter information, a first priority of the first type of CSI and a second priority of the second type of CSI; and determine a priority order based on the first priority and the second priority.

In some embodiments, the second processor 22 may be further configured to: in a case where the first type of CSI and the second type of CSI are contained in the same CSI report, configure, in the parameter information, priority information regarding the first priority of the first type of CSI and the second priority of the second type of CSI, and transmit the parameter information to the user equipment. In this way, the user equipment may be enabled to determine the first priority of the first type of CSI and the second priority of the second type of CSI based on the parameter information, and determine the priority order based on the first priority and the second priority.

In some embodiments, the second processor 22 may be further configured to: in a case where the first type of CSI and the second type of CSI are contained in two different CSI reports, configure, in the parameter information, a first CSI report parameter of a first CSI report corresponding to the first type of CSI and a second CSI report parameter of a second CSI report corresponding to the second type of CSI, and transmit the first CSI report parameter and the second CSI report parameter to the user equipment. In this way, the user equipment may be enabled to determine the first priority of the first type of CSI and the second priority of the second type of CSI based on the first CSI report parameter and the second CSI report parameter, and determine the priority order based on the first priority and the second priority.

In some embodiments, the second processor 22 may be further configured to: configure an uplink resource. The uplink resource may be configured to enable the user equipment to determine whether to discard or omit the first type of CSI or the second type of CSI based on a first number of bits that the uplink resource is capable of carrying.

In some embodiments, the configuration information may include configurations indicating one or more CSI reports. The configurations indicating one or more CSI reports may be associated with the same CSI-RS resource.

In some embodiments, the configuration information may include a report quantity configuration of the second type of CSI. The report quantity configuration of the second type of CSI may at least include a PMI.

In some embodiments, the second processor 22 may be further configured to: receive a performance parameter threshold transmitted by the user equipment. The performance parameter threshold may be associated with the first type of CSI and/or the second type of CSI.

Some embodiments of the present disclosure may provide a storage medium. The storage medium may be configured to store a computer program. The computer-readable storage medium may store one or more programs. The one or more programs may be executed by one or more processors, applied to a user equipment and/or a network device, and configured to implement the aforementioned channel state information reporting method.

It should be noted that in some embodiments of the present disclosure, the terms "include", "including", or any other variation thereof may be intended to cover a non-exclusive inclusion, such that a process, method, article, or apparatus that may include a series of elements may not only include those elements but may also include other elements not expressly listed, or may also include the inherent elements of such a process, method, article, or apparatus. Without further limitations, an element defined by the phrase "including a..." does not exclude the presence of additional identical elements in the process, method, article, or apparatus that may include the element.

From the above description of some embodiments, those skilled in the art may clearly understand that the methods of the above embodiments may be implemented by means of software and a necessary universal hardware platform. Of course, the methods may also be implemented by hardware. However, in many cases, the former (software and a necessary universal hardware platform) may be a better implementation manner. Based on such understanding, the technical solution of the present disclosure, in essence or the part that contributes to the related art, may be embodied in the form of a software product. The software product may be stored in a storage medium (such as a Read-Only Memory/Random Access Memory (ROM/RAM), a magnetic disk, an optical disc) and may include several instructions to cause an image display device (which may be a mobile phone, a computer, a server, an air conditioner, a network device, etc.) to execute the methods described in the various embodiments of the present disclosure.

The above description may be only some embodiments of the present disclosure and may be not intended to limit the protection scope of the present disclosure.

## Claims

1. A channel state information reporting method, performed by a user equipment, the method comprising:
receiving configuration information regarding Channel State Information (CSI) transmitted by a network device, determining a first type of CSI and a second type of CSI based on the configuration information; and
reporting the first type of CSI and the second type of CSI to the network device.

2. The method as claimed in claim 1, further comprising:
receiving parameter information regarding priorities of the first type of CSI and the second type of CSI transmitted by the network device;
determining, based on the parameter information, a first priority of the first type of CSI and a second priority of the second type of CSI; determining a priority order based on the first priority and the second priority; and
reporting the first type of CSI and the second type of CSI based on the priority order.

3. The method as claimed in claim 2, wherein the determining, based on the parameter information, the first priority of the first type of CSI and the second priority of the second type of CSI, comprises:
determining, from the parameter information, priority information regarding the first priority of the first type of CSI and the second priority of the second type of CSI, in a case where the first type of CSI and the second type of CSI are contained in the same CSI report; and
determining, based on the priority information, the first priority of the first type of CSI and the second priority of the second type of CSI.

4. The method as claimed in claim 2, wherein the determining, based on the parameter information, the first priority of the first type of CSI and the second priority of the second type of CSI, comprises:
determining, from the parameter information, a first CSI report parameter of a first CSI report corresponding to the first type of CSI and a second CSI report parameter of a second CSI report corresponding to the second type of CSI, in a case where the first type of CSI and the second type of CSI are contained in two different CSI reports, wherein the two different CSI reports have a linkage relationship;
determining, based on a preset rule and the first CSI report parameter, a first operation result; determining, based on the preset rule and the second CSI report parameter, a second operation result;
determining, in a case where the first operation result is lower than the second operation result, the priority order as the first priority of the first type of CSI being over the second priority of the second type of CSI; or
determining, in a case where the first operation result is higher than the second operation result, the priority order as the first priority of the first type of CSI being below the second priority of the second type of CSI; or
determining, in a case where the first operation result is equal to the second operation result, the priority order as the first priority of the first type of CSI being equal to the second priority of the second type of CSI.

5. The method as claimed in claim 2, further comprising:
determining a first number of bits that an uplink resource configured by the network device is capable of carrying and a second number of bits occupied by the first type of CSI and the second type of CSI reported by the user equipment;
omitting, in a case where the first number of bits is less than the second number of bits and the first priority is lower than the second priority, the first type of CSI; or
omitting, in a case where the first number of bits is less than the second number of bits and the first priority is higher than the second priority, the second type of CSI.

6. The method as claimed in claim 1, wherein the configuration information comprises configurations indicating one or more CSI reports, and the configurations indicating one or more CSI reports are associated with the same CSI Reference Signal (CSI-RS) resource.

7. The method as claimed in claim 1, wherein the configuration information comprises a report quantity configuration of the second type of CSI, and the report quantity configuration of the second type of CSI at least comprises a Precoding Matrix Indicator (PMI).

8. The method as claimed in claim 1, wherein the reporting the first type of CSI and the second type of CSI to the network device comprises:
reporting the first type of CSI and the second type of CSI to the network device in a periodic, aperiodic, or semi-persistent reporting manner.

9. The method as claimed in claim 1, further comprising:
transmitting a performance parameter threshold to the network device, wherein the performance parameter threshold is associated with the first type of CSI and/or the second type of CSI.

10. A channel state information reporting method, performed by a network device, the method comprising:
configuring configuration information regarding Channel State Information (CSI), transmitting the configuration information to a user equipment; and
receiving a first type of CSI and a second type of CSI reported by the user equipment.

11. The method as claimed in claim 10, further comprising:
configuring parameter information regarding priorities of the first type of CSI and the second type of CSI; and
transmitting the parameter information to the user equipment;
wherein the user equipment is configured to determine a first priority of the first type of CSI and a second priority of the second type of CSI based on the parameter information, and determine a priority order based on the first priority and the second priority.

12. The method as claimed in claim 11, wherein the configuring the parameter information regarding the priorities of the first type of CSI and the second type of CSI comprises:
configuring, in the parameter information, priority information regarding the first priority of the first type of CSI and the second priority of the second type of CSI in a case where the first type of CSI and the second type of CSI are contained in the same CSI report; and
transmitting the parameter information to the user equipment, wherein the user equipment is configured to determine the first priority of the first type of CSI and the second priority of the second type of CSI based on the parameter information, and determine the priority order based on the first priority and the second priority.

13. The method as claimed in claim 11, wherein the configuring the parameter information regarding the priorities of the first type of CSI and the second type of CSI comprises:
configuring, in the parameter information, a first CSI report parameter of a first CSI report corresponding to the first type of CSI and a second CSI report parameter of a second CSI report corresponding to the second type of CSI in a case where the first type of CSI and the second type of CSI are contained in two different CSI reports; and
transmitting the first CSI report parameter and the second CSI report parameter to the user equipment, wherein the user equipment is configured to determine the first priority of the first type of CSI and the second priority of the second type of CSI based on the first CSI report parameter and the second CSI report parameter, and determine the priority order based on the first priority and the second priority.

14. The method as claimed in claim 10, wherein before receiving the first type of CSI and the second type of CSI reported by the user equipment, the method further comprises:
configuring an uplink resource, wherein the uplink resource is configured to enable the user equipment to determine whether to omit the first type of CSI or the second type of CSI based on a first number of bits that the uplink resource is capable of carrying.

15. The method as claimed in claim 10, wherein the configuration information comprises configurations indicating one or more CSI reports, and the configurations indicating one or more CSI reports are associated with the same CSI Reference Signal (CSI-RS) resource.

16. The method as claimed in claim 10, wherein the configuration information comprises a report quantity configuration of the second type of CSI, and the report quantity configuration of the second type of CSI at least comprises a Precoding Matrix Indicator (PMI).

17. The method as claimed in claim 10, further comprising:
receiving a performance parameter threshold transmitted by the user equipment, wherein the performance parameter threshold is associated with the first type of CSI and/or the second type of CSI.

18. A user equipment, comprising:
a determining unit, configured to receive configuration information regarding Channel State Information (CSI) transmitted by a network device, and determine a first type of CSI and a second type of CSI based on the configuration information; and
a reporting unit, configured to report the first type of CSI and the second type of CSI to the network device.

19. A network device, comprising:
a transmitting unit, configured to configuration information regarding Channel State Information (CSI), and transmit the configuration information to a user equipment; and
a receiving unit, configured to receive a first type of CSI and a second type of CSI reported by the user equipment.

20. A user equipment, comprising a first processor and a first memory, wherein the first processor, when executing a running program stored in the first memory, is configured to implement the method as claimed in any one of claims 1 to 9.

21. A network device, comprising a second processor and a second memory, wherein the second processor, when executing a running program stored in the second memory, is configured to implement the method as claimed in any one of claims 10 to 17.

22. A storage medium storing a computer program, wherein the computer program, when executed by a processor, is configured to implement the method as claimed in any one of claims 1 to 9; or the computer program, when executed by the processor, is configured to the method as claimed in any one of claims 10 to 17.
